Europäisches Patentamt

European Patent Office

Office européen des brevets

(19)

(11) Publication number: **0 322 828**
**A1**

## (12) EUROPEAN PATENT APPLICATION

(21) Application number: 88121648.5

(22) Date of filing: 24.12.88

(51) Int. Cl.4: **B01D 27/08 , B01D 27/10**

(30) Priority: 29.12.87 IT 2325287

(43) Date of publication of application:
05.07.89 Bulletin 89/27

(84) Designated Contracting States:
AT BE CH DE ES FR GB GR LI LU NL SE

(71) Applicant: FIAAM FILTER S.P.A.
Via V. Barbieri 1
I-46100 Mantova(IT)

(72) Inventor: Giroldi, Angelo
Via Podgora 28
I-46030 Virgilio Mantova(IT)

(74) Representative: Modiano, Guido et al
MODIANO, JOSIF, PISANTY & STAUB
Modiano & Associati Via Meravigli, 16
I-20123 Milan(IT)

(54) **Anti-drainage valve for oil filters for internal combustion engines.**

(57) The invention relates to an anti-drainage valve for oil filters for internal combustion engines, of the type comprising a container containing a filtering element, closed by a head (2) provided with an axial connection (2a) for communication with the engine and with a plurality of holes (2b) for connection to an oil sump distributed along a circumference concentrical to said connection (2a). The valve comprises a tube section (7) adapted to be associated at one end with the inner wall of the filtering element (4) and rigidly associated at the other end with a rubber washer (8) having the shape of a circular crown. The tube section (7) contacts only by means of the rubber washer (8) the head (2) region comprised between the axial connection (2a) and the circumference containing the axes of the holes for communication with the oil sump, and is provided at the periphery with a slideable disk (9) having a circumferential ridge (9a) pushed against the rubber washer (8) to make it adhere to the head (2) at a circumference comprising the holes (2b) for communication with an oil sump.

Fig. 3

EP 0 322 828 A1

## ANTI-DRAINAGE VALVE FOR OIL FILTERS FOR INTERNAL COMBUSTION ENGINES

The invention relates to an anti-drainage valve for oil filters for internal combustion engines.

As known, widespread use is made of oil filters in the field of internal combustion engines, particularly for motor vehicles, for filtering the lubricating oil thereof.

Such filters comprise a container which has the shape of a cup, adapted to contain a filtering element occupying a hollow cylindrical portion of space and resting on the bottom of the container with the interposition of an elastic element. Said container is closed by means of a head typically provided with a threaded axial connection, adapted to connect the filter to the engine, and with a plurality of holes, distributed on a circumference concentrical to said connection and adapted to communicate the oil sump with the space defined at the interior of the filter comprised between the container and the filtering element.

When the oil filter is mounted with the head inclined downwards, it is necessary to provide between the filtering element and the head, a valve, known as an anti-drainage valve which has two functions.

The first function, which in the case of filters mounted with the head directed upwards is performed by a simple spacer element, is that of preventing direct communication between the holes for communication with the oil sump and the connection for communication with the engine, so that the pressurized oil entering from said holes flows into the region comprised between the container and the filtering element to pass through said filtering element so as to move into the portion of space inside the filter and to flow, through the axial connection, to the engine to perform its lubricating function.

The second function is to prevent, with the engine off, the amount of oil contained in the portion of space comprised between the container of the filter and the filtering element, which is incapable of passing through said filtering element since it is not under pressure, from exiting by gravity from the holes for communication with the oil sump provided in the head. Such a return flow of oil into said sump would consequently cause emptying of the filter, which would be harmful since in the initial phase of the subsequent operation of the engine, no oil would reach the engine until the filter became re-filled with oil.

According to the prior art, the anti-drainage valve is constituted by a rubber washer in the shape of a circular crown which is associated with the axial connection present in the head and is intended to be pressed against said head by a cup-shaped spring which in turn is associated with the filtering element in different manners depending on whether said filtering element is delimited by metallic covers or by cardboard ones: in the case of metallic covers, the cup spring is associated with the periphery of a tab of the cover, while in the case of cardboard covers a spacer element is provided, which is made of, for example, a plastic material and inserted into the cardboard cover, having a periphery associated with the cup-shaped spring.

It is immediately apparent that the steps of construction and the positioning of such a conventional valve inside the filter are very laborious; to this severely disadvantageous characteristic, which affects the overall cost of the filter by a considerable percentage, one must add the need to have available a great assortment of rubber washers with different internal diameters for association with connections of different diameters in the heads.

The aim of the present invention is to provide an anti-drainage valve adapted to be assembled and positioned inside a filter with an automatic process, thereby reducing manufacturing costs. Within the above-mentioned aim, an object of the invention is to provide an a anti-drainage valve which is adapted to be mounted on any filter, regardless of the diameter of the axial connection for connecting the head to an engine.

The proposed aim and objects, as well as other objects which will become apparent hereinafter are achieved according to the invention by an anti-drainage valve for oil filters for internal combustion engines, of the type comprising a cup-shaped container adapted to contain a filtering element occupying a hollow cylindrical portion of space and resting on the bottom of the container with the interposition of an elastic element, and furthermore comprising a head for closing the container provided with a threaded axial connection adapted to connect the filter to the engine, and with a plurality of holes, distributed along a circumference concentrical to said connection and adapted to connect the filter to an oil sump, said valve being characterized in that it comprises a tube section adapted to be associated at one end with the inner wall of the filtering element and rigidly associated at the other end with a washer having the shape of a circular crown, said tube section being adapted to make contact exclusively by means of said washer with the head region comprised between the axial connection and the circumference containing the axes of the plurality of holes for communication with an oil sump, and being provided at the periphery with a slideable disk having a circumferential ridge pushed by an elastic element to press with said ridge against the washer so as to force it against the head at a circumference comprising in its interior said plurality of holes for communication with an oil sump.

Further characteristics and advantages of the invention will become apparent from the description of a preferred but not exclusive embodiment of the invention, illustrated only by way of non-limitative example in the accompanying drawings, wherein:

figure 1 is an exploded view of a drainage valve according to the prior art;

figure 2 is a view, partially sectioned according to a diametral plane, of a drainage valve according to the invention;

figure 3 is a view of the drainage valve according to the invention mounted in an oil filter.

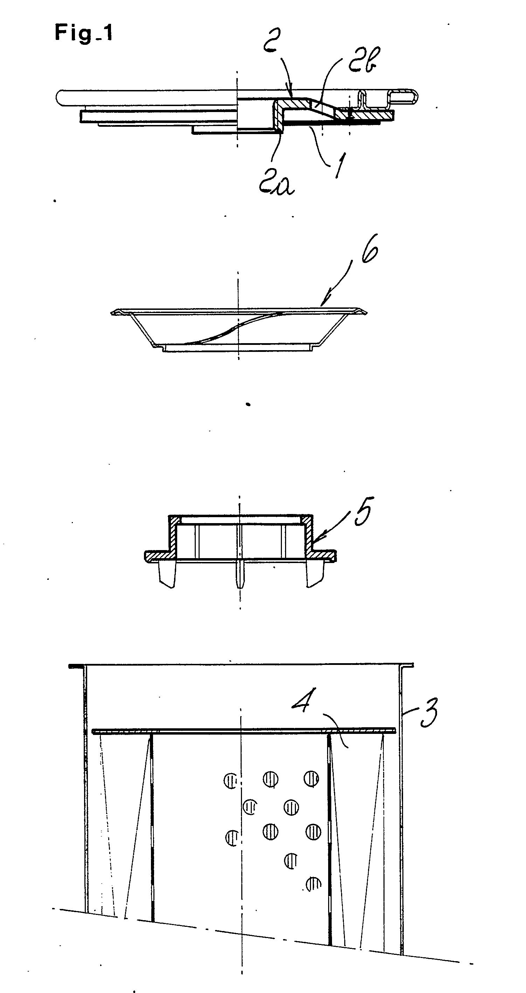

With reference to the above described drawings, figure 1 illustrates a drainage valve according to the prior art for an oil filter with a filtering element having a cardboard structure, and which comprises a rubber washer 1 having the shape of a circular crown associated with the axial connection 2a of the head 2 for connecting the oil filter to the engine. Said head also comprises a plurality of holes 2b, arranged on a circumference concentrical to the connection 2a and connecting the filter to the oil sump of an engine. The head is adapted to be seamed onto a container 3 containing the filtering element having a cardboard structure 4.

The spacer 5 is associated with the inner part of the filtering element 4, and the cup-shaped spring 6, capable of compressing the rubber washer 1 against the head 2, is to be arranged at its periphery.

All these components are assembled manually on a line which comprises three separate operations carried out by several operators: one operation for the insertion of the spacer 5 into the filtering element 4, another operation for positioning the cup-shaped spring 6, and yet another operation to associate the rubber washer 1 with the connection 2a of a head and arrange the head on the container 3, ready to be seamed.

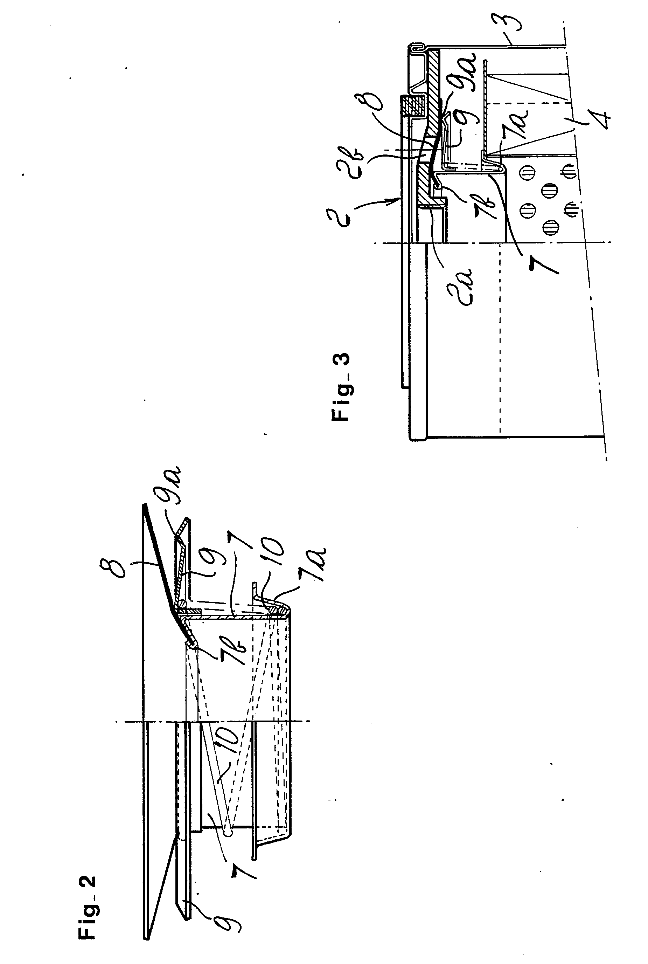

This manner of proceeding by manual operations is uneconomical, and is surpassed with the adoption of the valve according to the invention which is now described with reference to figures 2 and 3.

Said valve comprises a tube section 7 advantageously made of metal, folded over to define a fold 7a at the end thereof intended to be associated with the filtering element 4, and having, rigidly coupled to the other end thereof, a rubber washer 8, gripped by another fold 7b of the edge and having the shape of a circular crown; a disk 9 is slideable at the periphery of the tube section 7 and has a circumferential ridge 9a, pushed against the rubber washer 8 by the helical spring 10.

When the valve is mounted in the filter with the head 2 seamed onto the container 3 (figure 3), the filtering element 4 is pushed towards the head 2 by an elastic element, not illustrated in the figure, interposed between the filtering element and the bottom of the container 3, and so the section of tube 7 makes contact by means of the rubber washer 8 with said head in the region comprised between the axial connection 2a and the plurality of holes 2b distributed, as described, on a circumference concentrical to said connection; one main characteristic of the invention is indeed the configuration of the fold 7b which grips the rubber washer 8, such as to ensure that the contact of the tube section 7 with the head 2 occurs exclusively by means of said rubber washer, and in this manner it is ensured that the described valve correctly performs the function of preventing the oil entering through the holes 2b from passing directly to the connection 2a without passing through the filtering element 4.

It should be furthermore noted that the ridge 9a of the disk 9 has such a size as to compress the rubber washer 8 against the head 2 at a circumference external with respect to the circumferential region comprising the holes 2b for communication with the sump; in this manner, while during the operation of the engine the oil can enter the filter from said holes since, by virtue of its pressure, it determines the lowering of the disk 9 overcoming the action of the spring 10, with consequent detachment of the rubber washer 8 from the head and opening of said holes 2b, with the engine off the action of said spring determines the contact of the rubber washer 8 with the head and the consequent closure of the holes 2b, so that the oil contained in the portion of space comprised between the filtering element 4 and the container 3 cannot exit by gravity, which would cause the emptying of the filter.

The described valve is adapted to be manufactured with an automatic process, and, also with an automatic in-line filter assembly process, to be positioned on said filter, with an easily imaginable saving in costs; it is furthermore adapted to be mounted on filters with different diameters of the head's axial connection.

The described invention is susceptible to numerous modifications and variations, all within the scope of the inventive concept; furthermore all the details may be replaced with other technically equivalent elements. In the practical embodiment of the invention. Any materials, shapes and dimensions may be used according to the requirements.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Anti-drainage valve for oil filters for internal combustion engines, of the type comprising a cup-shaped container adapted to contain a filtering element occupying a hollow cylindrical portion of space and resting on the bottom of the container with the interposition of an elastic element, and furthermore comprising a head for closing the container provided with a threaded axial connection adapted to connect the filter to the engine, and with a plurality of holes, distributed along a circumference concentrical to said connection and adapted to connect the filter to an oil sump, said valve being characterized in that it comprises a tube section adapted to be associated at one end with the inner wall of the filtering element and rigidly associated at the other end with a washer having the shape of a circular crown, said tube section being adapted to make contact exclusively by means of said washer with the head portion comprised between the axial connection and the circumference containing the axes of the plurality of holes for communication with an oil sump, and being provided at the periphery with a slideable disk having a circumferential ridge pushed by an elastic element to press with said ridge against the washer so as to force it against the head at a circumference comprising in its interior said plurality of holes for communication with an oil sump.

2. Anti-drainage valve according to claim 1, characterized in that the rubber washer is rigidly associated with the end of the tube section by being gripped in a fold of the edge thereof such as to not exceed in height the upper surface of said rubber washer when said rubber washer is pressed against the head.

3. Anti-drainage valve according to claim 1, characterized in that the elastic element for forcing the disk slideable at the periphery of the tube section against the rubber washer is constituted by a helical spring which extends at the periphery of said tube section making contact at one end with said disk and being inserted at the other end in a fold of the edge of said tube section.

**Fig.1**

Fig_2

Fig_3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 191 613 (KNECHT) <br> * Pages 2-3 * <br> --- | 1,3 | B 01 D 27/08 <br> B 01 D 27/10 |
| A | US-A-3 204 771 (J.A. BALDWIN) <br> * Column 3, lines 2-11,41-57 * <br> --- | 1,3 | |
| A | GB-A-1 341 116 (GENERAL MOTORS) <br> * Page 3, lines 99-104; page 4 * <br> --- | 1-3 | |
| A | FR-A-1 428 354 (KNECHT) <br> --- | | |
| A | GB-A-1 066 308 (WIX) <br> ----- | | |

TECHNICAL FIELDS
SEARCHED (Int. Cl.4)

B 01 D

The present search report has been drawn up for all claims

| Place of search | Date of completion of the search | Examiner |
|---|---|---|
| THE HAGUE | 27-01-1989 | DE PAEPE P.F.J. |

EPO FORM 1503 03.82 (P0401)